# EUROPÄISCHE PATENTSCHRIFT

(11) **EP 3 465 088 B1**
(45) Veröffentlichungstag und Bekanntmachung des Hinweises auf die Patenterteilung: **25.03.2026**
(21) Anmeldenummer: 17721593.6
(22) Anmeldetag: 27.04.2017
(51) Int. Cl.: G01C 21/30, G01C 21/36, G08G 1/16, G06V 20/56

(54) **VERFAHREN, VORRICHTUNG UND COMPUTERLESBARES SPEICHERMEDIUM MIT INSTRUKTIONEN ZUR BESTIMMUNG DER LATERALEN POSITION EINES FAHRZEUGES RELATIV ZU DEN FAHRSTREIFEN EINER FAHRBAHN**
METHOD, DEVICE AND COMPUTER READABLE STORAGE MEDIUM WITH INSTRUCTIONS FOR DETERMINING THE LATERAL POSITION OF A VEHICLE RELATIVE TO THE LANES OF A CARRIAGEWAY
PROCÉDÉ, DISPOSITIF ET SUPPORT D'INFORMATIONS LISIBLE PAR ORDINATEUR COMPRENANT DES INSTRUCTIONS POUR DÉTERMINER LA POSITION LATÉRALE D'UN VÉHICULE PAR RAPPORT AUX BANDES DE CIRCULATION D'UNE CHAUSSÉE

(30) Priorität: 27.05.2016 DE 102016209232
(43) Veröffentlichungstag der Anmeldung: 10.04.2019
(73) Patentinhaber: Volkswagen Aktiengesellschaft, 38440 Wolfsburg (DE)
(72) Erfinder: SCHACK, Moritz, 38106 Braunschweig (DE); KERPER, Markus, 38116 Braunschweig (DE)
(86) Internationale Anmeldenummer: PCT/EP2017/060130
(87) Internationale Veröffentlichungsnummer: WO 2017/202570

(56) Entgegenhaltungen:
- EP-A1- 2 012 211
- WU TAO ET AL: "Vehicle localization using road markings", 2013 IEEE INTELLIGENT VEHICLES SYMPOSIUM (IV), IEEE, 23 June 2013 (2013-06-23), pages 1185 - 1190, XP032501999, ISSN: 1931-0587, [retrieved on 20131010], DOI: 10.1109/IVS.2013.6629627

## Beschreibung

Die vorliegende Erfindung betrifft ein Verfahren, eine Vorrichtung und ein computerlesbares Speichermedium mit Instruktionen zur Bestimmung der lateralen Position eines Fahrzeuges relativ zu den Fahrstreifen einer Fahrbahn, und insbesondere zur Bestimmung einer relativen lateralen Position mit Sub-Fahrstreifengenauigkeit. Die vorliegende Erfindung betrifft weiterhin ein Fahrzeug mit einer solchen Vorrichtung und eine Fahrstreifengeometriekarte mit Fahrstreifenmittengeometrien und Fahrstreifenrandgeometrien zur Verwendung mit einem solchen Verfahren oder einer solchen Vorrichtung.

Moderne Fahrzeuge werden zunehmend autonomer, d.h. die Fahrzeuge stellen dem Fahrer mehr und mehr Funktionen und Systeme zur Verfügung, die ihn bei der Kontrolle des Fahrzeugs durch Hinweise unterstützen oder Teile der Fahrzeugkontrolle übernehmen. Für derartige Funktionen und Systeme wird eine Vielzahl von Information über das Fahrzeug und seine Umgebung benötigt.

Für die Funktion "fahrstreifengenaue Navigation" wird beispielsweise die Kenntnis über den Fahrstreifen benötigt, auf dem sich das zu navigierende Fahrzeug, das "Ego-Fahrzeug", befindet. Dieser Fahrstreifen wird auch als "Ego-Fahrstreifen" bezeichnet. Weiterhin werden für das automatische Fahren und Car-to-Car-basierte Anwendungen neben der Kenntnis des Ego-Fahrstreifens auch genauere Informationen hinsichtlich der Querablage des Ego-Fahrzeugs relativ zum Ego-Fahrstreifen benötigt. Es muss zu jeder Zeit mit Sub-Fahrstreifengenauigkeit bekannt sein, wo sich das Ego-Fahrzeug lateral in Bezug auf die Fahrbahn befindet.

Die Druckschrift US 2014/0358321 A1 offenbart ein Verfahren zur Erkennung und Nachverfolgung der Begrenzungen einer Fahrspur. Das Verfahren verwendet Karten mit Informationen zur Straßengeometrie, GPS-Daten, Verlaufsdaten und die Positionen anderer Fahrzeuge zur Bestimmung der aktuellen Position.

Die Druckschrift EP 2 899 669 A1 beschreibt ein Verfahren zur Bestimmung der lateralen Position eines Fahrzeugs relativ zur Fahrspur einer Straße. Mit Hilfe einer Kamera werden geometrische Aspekte der Fahrspuren ermittelt, beispielsweise Fahrbahnmarkierungen. Die ermittelten Aspekte werden klassifiziert und dienen zur Positionsbestimmung. Die Klassifizierung erfordert ein Training der Klassifizierungseinheit.

Die Druckschrift DE 10 2012 104 786 A1 beschreibt ein System zum genauen Abschätzen einer Spur, in welcher ein Fahrzeug fährt. Ein System zur Spurermittlung stellt geschätzte Spuren bereit, die auf unterschiedliche Weisen bestimmt werden. Beispiele sind von einer Kamera erfasste Spurmarkierungen, ein Führungsfahrzeug oder GPS/Karten, welche bis auf Spurniveau genau sind. Die geschätzten Spuren sind mit Konfidenzinformationen versehen. Die geschätzten Spuren und die entsprechenden Konfidenzinformationen werden fusioniert, um eine ermittelte Spur zu ergeben.

Zusammenfassend werden zur Zeit im Wesentlichen drei Lösungsansätze für die Bestimmung der lateralen Position eines Fahrzeuges relativ zu einer Fahrbahn verfolgt.

Ein erster Ansatz besteht in der Verwendung einer hochgenau eingemessenen digitalen Fahrstreifengeometriekarte mit einer absoluten Genauigkeit im Zentimeterbereich in Verbindung mit einem hochgenauen Zweifrequenz-GPS-System. Hierbei wird die Position in der Karte mit Hilfe des GPS-Sensors ohne weitere bildgebende Sensorik bestimmt. Durch GPS- und Kartenungenauigkeiten bezüglich der absoluten Position ist allerdings oftmals keine Zuordnung des Ego-Fahrzeugs zum richtigen Fahrstreifen möglich. Zudem ist eine Lösung mit einer hochgenauen Karte und hochgenauem GPS sehr kostenintensiv.

Ein weiterer Ansatz besteht in der Nutzung bildgebender Sensoren, z.B. eines Kamerasystems. Hierdurch wird die Zuordnung des Ego-Fahrzeugs zu Fahrstreifen bezogen auf von der Sensorik ermittelte Fahrstreifen ermöglicht. Die Nutzung von bildgebenden Sensoren ohne die gleichzeitige Verwendung einer digitalen Karte führt allerdings dazu, dass häufig nur ein oder zwei Fahrstreifen durch die Sensorik erkannt werden.

Die Positionierung des Ego-Fahrzeugs kann dann nur relativ zu den erkannten Fahrstreifen erfolgen, nicht aber relativ zu allen Fahrstreifen.

Ein dritter Ansatz kombiniert bildgebende Sensorik mit Karteninformationen bezüglich Anzahl und Markierungstyp der Fahrstreifen. Durch die Nutzung bildgebender Sensoren und der Information aus einer digitalen Karte, wie viele Fahrstreifen vorhanden sind und mit welcher Randmarkierung diese vorliegen (gestrichelt, durchgezogen,...), kann das Ego-Fahrzeug zu allen Fahrstreifen zugeordnet werden. Aufgrund von Abstandsfehlern der durch die Sensoren erfassten Fahrstreifenmarkierungen relativ zum Ego-Fahrzeug ist jedoch die Genauigkeit der Querablage bezüglich des entsprechenden Fahrstreifens für die oben genannten Anwendungen nicht ausreichend.

Der Artikel von T. Wu et al.: "Vehicle Localization using Road Markings", 2013 IEEE Intelligent Vehicles Symposium, 23. Juni 2013, Seiten 1185-1190, beschreibt ein Verfahren zur visuellen Lokalisierung eines Fahrzeugs unter Verwendung von auf der Straße angebrachten Markierungen, wie z.B. Pfeilen, Fußgängerüberwegen und Geschwindigkeitsbegrenzungen. Bei dem Verfahren werden derartige Markierungen automatisch erkannt und ausgewertet. Merkmale der Markierungen, insbesondere Eckpunkte, werden dann genutzt, um den Standort des Fahrzeugs zu berechnen. Dazu wird auf eine Datenbank zurückgegriffen, die zuvor vermessene Merkmale der Markierungen enthält.

Es ist eine Aufgabe der Erfindung, ein Verfahren und eine Vorrichtung zur Bestimmung einer lateralen Position eines Fahrzeuges relativ zu den Fahrstreifen einer Fahrbahn zur Verfügung zu stellen, die eine Bestimmung der relativen lateralen Position mit Sub-Fahrstreifengenauigkeit ermöglichen.

Diese Aufgabe wird durch ein Verfahren mit den Merkmalen des Anspruchs 1, durch eine Vorrichtung mit den Merkmalen des Anspruchs 4, sowie durch ein computerlesbares Speichermedium mit Instruktionen gemäß Anspruch 7 gelöst. Bevorzugte Ausgestaltungen der Erfindung sind Gegenstand der abhängigen Ansprüche.
- Fig. 1: zeigt schematisch ein Verfahren zur Bestimmung einer lateralen Position eines Fahrzeuges relativ zu den Fahrstreifen einer Fahrbahn;
- Fig. 2: zeigt ein erstes Ausführungsbeispiel einer Vorrichtung zur Bestimmung einer lateralen Position eines Fahrzeuges relativ zu den Fahrstreifen einer Fahrbahn;
- Fig. 3: zeigt ein zweites Ausführungsbeispiel einer Vorrichtung zur Bestimmung einer lateralen Position eines Fahrzeuges relativ zu den Fahrstreifen einer Fahrbahn; und
- Fig. 4: zeigt eine bevorzugte Ausführungsform des in Fig. 1 dargestellten Verfahrens.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

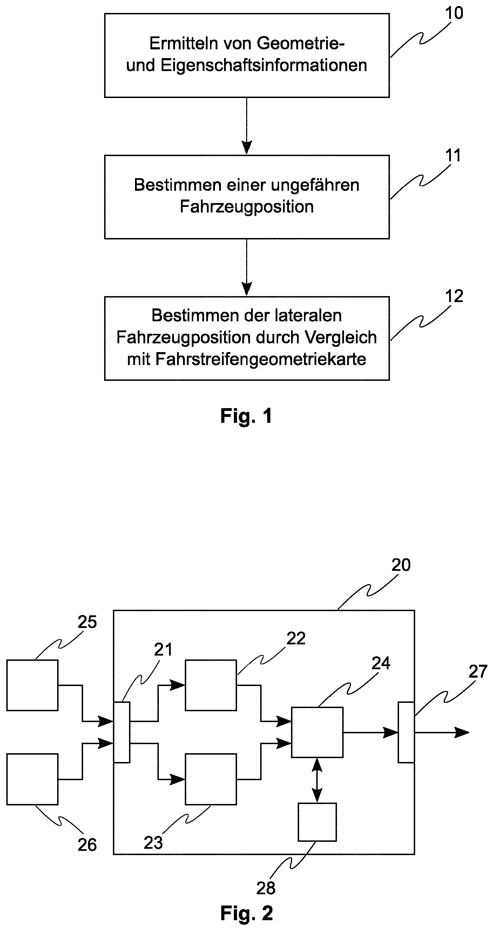

Fig. 1 zeigt schematisch ein Verfahren zur Bestimmung einer lateralen Position eines Fahrzeuges relativ zu den Fahrstreifen einer Fahrbahn. In einem ersten Schritt werden Geometrieinformationen und Eigenschaftsinformationen von Fahrbahnmarkierungen ermittelt 10. Weiterhin wird eine ungefähre Position des Fahrzeugs bestimmt 11. Durch Vergleichen der ermittelten Geometrieinformationen und Eigenschaftsinformationen der Fahrbahnmarkierungen mit Fahrbahnmarkierungsgeometrien an der für das Fahrzeug bestimmten ungefähren Position aus einer Fahrstreifengeometriekarte wird schließlich die laterale Position des Fahrzeugs bestimmt 12. Zu diesem Zweck enthält die Fahrstreifengeometriekarte Fahrstreifenmittengeometrien und Fahrstreifenrandgeometrien mit hoher Genauigkeit zueinander.

Eine Menge von möglichen lateralen Positionen des Fahrzeugs wird bestimmt 12, wobei eine bestmögliche laterale Positionen des Fahrzeugs dann durch Anwendung zumindest einer Bewertungsfunktion ermittelt wird. Dabei kann eine Historie vergangener für das Fahrzeug bestimmter lateraler Positionen berücksichtigt werden. Für den Fall, dass durch das Vergleichen der ermittelten Geometrieinformationen und Eigenschaftsinformationen der Fahrbahnmarkierungen mit Fahrbahnmarkierungsgeometrien keine laterale Position des Fahrzeugs bestimmt werden kann, kann eine näherungsweise Position generiert werden.

Fig. 2 zeigt eine vereinfachte schematische Darstellung einer ersten Ausführungsform einer Vorrichtung 20 zur Bestimmung einer lateralen Position eines Fahrzeuges relativ zu den Fahrstreifen einer Fahrbahn.

Die Vorrichtung 20 hat eine Bildverarbeitungseinheit 22 zum Ermitteln 10 von Geometrieinformationen und Eigenschaftsinformationen von Fahrbahnmarkierungen. Zu diesem Zweck nutzt die Bildverarbeitungseinheit 22 Bildinformationen einer Kameraeinheit 25, die über einen Eingang 21 der Vorrichtung 20 empfangen werden. Die Vorrichtung 20 hat weiterhin eine Positionsbestimmungsseinheit 23 zum Bestimmen 11 einer ungefähren Position des Fahrzeugs. Die ungefähre Position des Fahrzeugs wird beispielsweise basierend auf Empfangsdaten eines GPS-Empfängers 26 bestimmt, die ebenfalls über den Eingang 21 empfangen werden können. Eine Auswerteeinheit 24 bestimmt 12 die laterale Position des Fahrzeugs durch Vergleichen der ermittelten Geometrieinformationen und Eigenschaftsinformationen der Fahrbahnmarkierungen mit Fahrbahnmarkierungsgeometrien an der für das Fahrzeug bestimmten ungefähren Position aus einer Fahrstreifengeometriekarte. Zu diesem Zweck enthält die Fahrstreifengeometriekarte Fahrstreifenmittengeometrien und Fahrstreifenrandgeometrien mit hoher Genauigkeit zueinander.

Die Auswerteeinheit 24 bestimmt 12 eine Menge von möglichen lateralen Positionen des Fahrzeugs. Eine bestmögliche laterale Positionen des Fahrzeugs wird dann durch Anwendung zumindest einer Bewertungsfunktion ermittelt. Dabei kann eine Historie vergangener für das Fahrzeug bestimmter lateraler Positionen bei der Bestimmung einer aktuellen lateralen Position des Fahrzeugs berücksichtigt werden. Für den Fall, dass durch das Vergleichen der ermittelten Geometrieinformationen und Eigenschaftsinformationen der Fahrbahnmarkierungen mit Fahrbahnmarkierungsgeometrien keine laterale Position des Fahrzeugs bestimmt werden kann, kann die Auswerteeinheit 24 eine näherungsweise Position generieren.

Die von der Auswerteeinheit 24 bestimmte laterale Position des Fahrzeugs wird vorzugsweise über einen Ausgang 27 der Vorrichtung 20 für die weitere Verarbeitung verfügbar gemacht, beispielsweise für die Verarbeitung in einem Spurführungssystem. Sie kann zudem in einem Speicher 28 der Vorrichtung 20 abgelegt werden, beispielsweise für eine spätere Auswertung. Der Eingang 21 und der Ausgang 27 können als getrennte Schnittstellen oder als eine kombinierte bidirektionale Schnittstelle implementiert sein. Die Bildverarbeitungseinheit 22, die Positionsbestimmungsseinheit 23 sowie die Auswerteeinheit 24 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft.

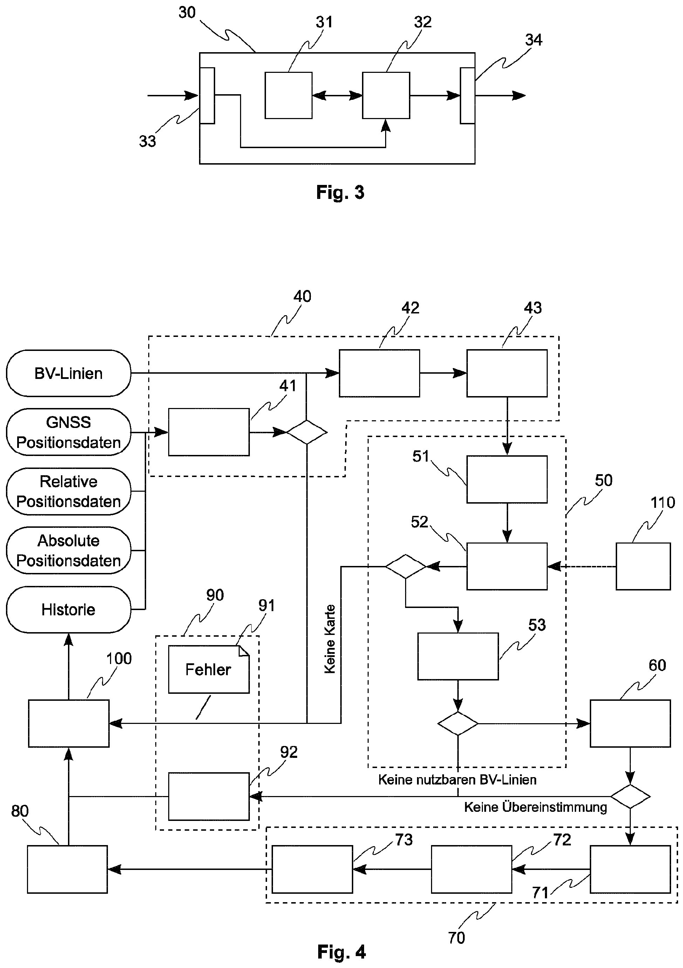

Fig. 3 zeigt eine vereinfachte schematische Darstellung einer zweiten Ausführungsform einer Vorrichtung 30 zur Bestimmung einer lateralen Position eines Fahrzeuges relativ zu den Fahrstreifen einer Fahrbahn. Die Vorrichtung 30 weist einen Prozessor 32 und einen Speicher 31 auf. Beispielsweise handelt es sich bei der Vorrichtung 30 um einen Computer oder eine Workstation. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung hat einen Eingang 33 zum Empfangen von Informationen. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 28, 31 der beschriebenen Ausführungsformen können volatile und/oder nichtvolatile Speicherbereiche aufweisen und unterschiedlichste Speichergeräte und Speichermedien umfassen, beispielsweise Festplatten, optische Speichermedien oder Halbleiterspeicher.

Nachfolgend soll eine bevorzugte Ausführungsform der Erfindung im Detail beschrieben werden. Das Verfahren basiert auf einer Reihe von Eingangsdaten. Benötigt werden zunächst die von dem bildgebenden Sensorsystem ermittelten Geometrie- und Eigenschaftsinformationen der sichtbaren Fahrbahnmarkierungen. Im Folgenden werden diese als BV-Linien bezeichnet (BV für Bildverarbeitung). Ebenfalls benötigt wird eine absolute Positionsinformation mit Richtungs- und Geschwindigkeitsangabe. Diese kann beispielsweise vom Fahrzeug-GPS zur Verfügung gestellt werden. Für die absoluten Positionsinformationen ist in der vorliegenden Ausführungsform eine Unterscheidung vorgesehen zwischen absoluten Positionsinformationen, die das direkte Ergebnis einer Ortung durch ein GNSS-System (GNSS: Global Navigation Satellite System) repräsentieren (GNSS Positionsdaten), und solchen, die basierend auf einer zurückliegenden GNSS-Ortung durch Dead-Reckoning (Koppelnavigation) interpoliert wurden (Absolute Positionsdaten). Optional kann auch eine relative, sprungfreie Positionsinformation genutzt werden, die z.B. mittels Bewegungsschätzung ermittelt wird. Zusätzlich werden Kartendaten mit hoher relativer Genauigkeit bezüglich Fahrstreifen und Fahrbahnmarkierungen verwendet. Diese werden beispielsweise durch einen Kartendaten-Server 110 zur Verfügung gestellt. Die Karteninformationen werden im Folgenden als DLM-Lanes (DLM: Detailed Lane Model, detailliertes Fahrstreifenmodell) und DLM-Lanemarkings bezeichnet. Vorzugsweise werden Ergebnisse aus dem vorausgegangenen Ablauf oder vorausgegangenen Abläufen des Verfahrens als Historie mit einbezogen, außer natürlich in der ersten Iteration.

Der prinzipielle Ablauf des Verfahrens gliedert sich in mehrere Teile, die in Fig. 4 teilweise in gestrichelt dargestellten Blöcken zusammengefasst sind.

Im Rahmen einer Aufbereitung 40 der Eingangsdaten wird eine ungefähre Fahrzeugposition bestimmt 41. Diese dient als Ausgangspunkt für den Abgleich von Fahrbahnmarkierungen mit Kartendaten. Zudem erfolgt eine Umrechnung und Aggregation der Geometrien der BV-Linien.

Die Geometrien der durch das Kamerasystem detektierten Fahrbahnmarkierungen werden typischerweise durch Klothoiden in einem fahrzeugrelativen, kartesische Koordinatensystem beschrieben. Die Klothoidenbeschreibungen werden überführt in Polylines, die die Klothoidengeometrien in guter Näherung nachbilden. Die Umwandlung in Polylines wird durchgeführt, da die nachfolgend auf den Fahrbahnmarkierungsgeometrien operierenden Algorithmen so deutlich einfacher zu implementieren sind. In der vorliegenden Ausführungsform werden die Koordinaten der Polylines aus dem fahrzeugrelativen, kartesischen Koordinatensystem in das WGS84-Koordinatensystem überführt 42. Die nachfolgenden Algorithmen operieren im WGS84-Koordinatensystem, da auch die Kartendaten und die Fahrzeugpositions- und -bewegungsinformationen typischerweise in diesem Koordinatensystem vorliegen.

Die Geometrien der durch das Kamerasystem erkannten Fahrbahnmarkierungen beginnen stets kurz vor dem Fahrzeug und haben eine Ausdehnung von einigen Metern ungefähr in Fahrtrichtung/Kamerablickrichtung. Gelegentlich werden durch das Kamerasystem Fahrbahnmarkierungen zunächst korrekt erkannt und übermittelt, jedoch kurz darauf nicht mehr detektiert. Die bei einer Algorithmusiteration vorhandenen BV-Linien werden darum stets zwischengespeichert und bei der nächsten Iteration mit den neu durch das Kamerasystem übermittelten Geometrien abgeglichen 43.

Nachfolgend werden wesentliche Geometrieaspekte extrahiert 50. Hierbei werden Punkte von BV-Linien und DLM-Lanemarkings zur longitudinalen Fahrzeugposition berechnet. Dazu wird zunächst eine Orthogonallinie einer konfigurierbaren Länge in einem konfigurierbaren Abstand von der ungefähren Fahrzeugposition konstruiert 51. Anschließend werden Schnittpunkte der DLM-Lanemarkings und der DLM-Lanes mit der orthogonalen Strecke ermittelt 52. Für jeden Schnittpunkt wird vorzugsweise seine laterale Position relativ zum Fahrzeug, z.B. als Entfernung vom Mittelpunkt der orthogonalen Strecke, und bei DLM-Lanemarkings die Information der Art der assoziierten Fahrbahnmarkierung (Linie gestrichelt/durchgezogen, Leitplanke, Fahrbahnrand, ...) festgehalten. In einem weiteren Schritt werden die Schnittpunkte der orthogonalen Strecke mit den BV-Linien gebildet 53. Wiederum wird für jeden Schnittpunkt vorzugsweise seine laterale Position relativ zum Fahrzeug und die Information der Art der erkannten Fahrbahnmarkierung (Linie gestrichelt/durchgezogen, Leitplanke, Fahrbahnrand,...) festgehalten.

Basierend auf den Ergebnissen des vorangegangenen Schrittes wird eine Menge von möglichen Fahrzeugpositionen ermittelt 60. Diese werden nachfolgend durch eine Sequenz entsprechender Bewertungsfunktionen bewertet 70, wobei die möglichen Fahrzeugpositionen gegebenenfalls ergänzt oder modifiziert werden. Mit Hilfe der Bewertungsfunktionen werden Strafpunkte vergeben. Eine erste Bewertungsfunktion 71 betrachtet die Zuordnung der von der Kamera erfassten Linientypen zu den in der Karte abgelegten Linientypen. Für diese Bewertung ist vorzugsweise eine konfigurierbare Matrix vorgesehen, die für jede Kombination aus BV-Linie und Kartenfahrbahnmarkierungstyp einen spezifischen Wert zuordnet. So können häufig vorkommende Fehlzuordnungen der Kamera, z.B. die Erkennung einer durchgezogenen als gestrichelte Linie, mit einer nur geringfügig schlechten Bewertung, unwahrscheinliche Fehlzuordnungen der Kamera, z.B. die Erkennung von Fahrbahnrand als Leitplanke, mit einer deutlich schlechten Bewertung assoziiert werden. Eine zweite Bewertungsfunktion 72 berücksichtigt die Historie der Fahrzeugpositionen. Mögliche Fahrzeugpositionen, die stark von der Historie abweichen, werden beispielsweise durch hohe Strafpunkte charakterisiert. In der vorliegenden Ausführungsform bewertet eine dritte Bewertungsfunktion 73 den Fahrstreifentyp. Das Fahrzeug wird auf einer regulären Fahrspur der Fahrbahn vermutet. Mögliche Fahrzeugpositionen auf nicht zum Befahren vorgesehene Fahrspuren (Seitenstreifen, "Unbekannte Fahrspuren" des DLM, und Standstreifen,...) werden darum schlecht bewertet, mögliche Fahrzeugpositionen auf befahrbaren Fahrspuren werden neutral bewertet. Als weiteres Beispiel werden für mögliche Fahrzeugpositionen auf der Gegenfahrbahn deutlich höhere Strafpunkte vergeben als für Positionen in Fahrtrichtung. Die Einstellung der Strafpunkte ist abhängig von den verwendeten Sensorsystem und der genutzten digitalen Karte.

Somit kann eine konkrete Anpassung für die verwendeten Systeme sehr leicht erfolgen. Als Ergebnis des Bewertungsverfahrens wird schließlich die bestbewertete mögliche Fahrzeugposition selektiert 80.

Während des Ablaufs des Verfahrens kann es an diversen Stellen vorkommen, dass aufgrund des Fehlens von Eingangsdaten oder einer unzureichenden Qualität der Eingangsdaten eine Positionsbestimmung nicht möglich ist und der Ablauf nicht fortgesetzt werden kann. Für solche Fälle ist es möglich, den modularen Ablauf an der entsprechenden Stelle zu verlassen und eine Fehlerbehandlung 90 zu initiieren, z.B. ein Ergebnis ohne Positionsinformation oder mit einer auf anderem Wege näherungsweise bestimmten Positionsinformation zu generieren. In Fig. 4 sind die Pfade des regulären Ablaufs durch durchgezogene Pfeile, die Pfade bei Abweichung vom regulären Ablauf durch gestrichelte Pfeile gekennzeichnet.

Beispielsweise wird bei Nichtverfügbarkeit von Kartendaten für die aktuelle Fahrzeugposition gemäß absoluter Positionsinformation keine Ermittlung der möglichen Fahrzeugpositionen durchgeführt. Bei Ausbleiben absoluter Positionsinformationen (z.B. kein GNSS-Empfang durch Bauwerke) kann bei Verfügbarkeit relativer Positionsinformationen die absolute Positionsinformation durch eine frühere absolute Positionsinformation und relative Positionsinformationen ersetzt werden. Stehen keine relativen Positionsinformationen zur Verfügung, wird bei Ausbleiben absoluter Positionsinformationen keine Ermittlung der möglichen Fahrzeugpositionen durchgeführt. In solchen Fällen wird ein entsprechender Fehlerzustand ausgegeben 91. Wurden hingegen zu wenig BV-Linien erkannt, kann keine hinreichend gute Zuordnung von DLM-Lanemarkings zu BV-Linien gefunden werden oder wurde keine einzige mögliche Fahrzeugpositionen ermittelt, kann mit Hilfe eines kartenbasierten Verfahrens 92 eine näherungsweise bestimmte Positionsinformation ermittelt werden. Eine Möglichkeit besteht beispielsweise darin, ein Fortsetzung der Fahrzeugbewegung entlang der Fahrstreifenmitte gemäß Karte anzunehmen. In einem abschließenden Schritt 100 werden die Ergebnisse aufbereitet, für die weitere Verarbeitung zur Verfügung gestellt und in die Historie übernommen.

## Patentansprüche

1. Verfahren zur Bestimmung einer lateralen Position eines Fahrzeuges relativ zu den Fahrstreifen einer Fahrbahn, mit den Schritten:
- Ermitteln (10) mittels einer Bildverarbeitungseinheit (22), die Bildinformationen einer Kameraeinheit (25) verarbeitet, von Geometrieinformationen und Eigenschaftsinformationen von Fahrbahnmarkierungen, wobei die Geometrieinformationen für einen begrenzten Bereich vor dem Fahrzeug einen Verlauf der Fahrbahnmarkierungen in Fahrtrichtung beschreiben und die Eigenschaftsinformationen eine Art der jeweiligen Fahrbahnmarkierungen beschreiben;
- Bestimmen (11) mittels einer Positionsbestimmungseinheit (23) einer ungefähren Position des Fahrzeugs; und
- Bestimmen (12) mittels einer Auswerteeinheit (24) der lateralen Position des Fahrzeugs durch Vergleichen der ermittelten Geometrieinformationen und Eigenschaftsinformationen der Fahrbahnmarkierungen mit Fahrbahnmarkierungsgeometrien an der für das Fahrzeug bestimmten ungefähren Position aus einer Fahrstreifengeometriekarte;
**dadurch gekennzeichnet, dass** die Fahrstreifengeometriekarte Fahrstreifenmittengeometrien und Fahrstreifenrandgeometrien mit hoher Genauigkeit zueinander enthält und beim Bestimmen (12) der lateralen Position des Fahrzeugs durch das Vergleichen der ermittelten Geometrieinformationen und Eigenschaftsinformationen der Fahrbahnmarkierungen mit den Fahrbahnmarkierungsgeometrien aus der Fahrstreifengeometriekarte eine Menge von möglichen lateralen Positionen des Fahrzeugs bestimmt und eine bestmögliche laterale Position des Fahrzeugs durch Anwendung einer Sequenz (70) entsprechender Bewertungsfunktionen ermittelt wird, wobei eine erste Bewertungsfunktion (71) eine der jeweiligen möglichen lateralen Position zugrundeliegende Zuordnung der von der Kameraeinheit (25) erfassten Linientypen der Fahrbahnmarkierungen zu den in der Fahrstreifengeometriekarte abgelegten Linientypen der Fahrbahnmarkierungen bewertet, eine zweite Bewertungsfunktion (72) eine Abweichung der jeweiligen möglichen lateralen Position von einer Historie der Positionen des bewertet, und eine dritte Bewertungsfunktion (73) eine Lage der jeweiligen möglichen lateralen Position auf einer befahrbaren oder nicht zum Befahren vorgesehene Fahrspur bewertet.

2. Verfahren gemäß Anspruch 1, **wobei** die ermittelten Eigenschaftsinformationen der Fahrbahnmarkierungen angeben, dass es sich bei der Fahrbahnmarkierung um eine gestrichelte Linie, eine durchgezogene Line, eine Leitplanke oder einen Fahrbahnrand handelt.

3. Verfahren gemäß Anspruch 1 oder 2, **wobei** für den Fall, dass durch das Vergleichen der ermittelten Geometrieinformationen und Eigenschaftsinformationen der Fahrbahnmarkierungen mit Fahrbahnmarkierungsgeometrien keine laterale Position des Fahrzeugs bestimmt werden kann, eine näherungsweise laterale Position generiert wird.

4. Vorrichtung (20) zur Bestimmung einer lateralen Position eines Fahrzeuges relativ zu den Fahrstreifen einer Fahrbahn, wobei die Vorrichtung (20) folgendes aufweist:
- Eine Bildverarbeitungseinheit (22), die Bildinformationen einer Kameraeinheit (25) verarbeitet, zum Ermitteln (10) von Geometrieinformationen und Eigenschaftsinformationen von Fahrbahnmarkierungen, wobei die Geometrieinformationen für einen begrenzten Bereich vor dem Fahrzeug einen Verlauf der Fahrbahnmarkierungen in Fahrtrichtung beschreiben und die Eigenschaftsinformationen eine Art der jeweiligen Fahrbahnmarkierungen beschreiben;
- Eine Positionsbestimmungseinheit (23) zum Bestimmen (11) einer ungefähren Position des Fahrzeugs; und
- Eine Auswerteeinheit (24) zum Bestimmen (12) der lateralen Position des Fahrzeugs durch Vergleichen der ermittelten Geometrieinformationen und Eigenschaftsinformationen der Fahrbahnmarkierungen mit Fahrbahnmarkierungsgeometrien an der für das Fahrzeug bestimmten ungefähren Position aus einer Fahrstreifengeometriekarte;
**dadurch gekennzeichnet, dass** die Fahrstreifengeometriekarte Fahrstreifenmittengeometrien und Fahrstreifenrandgeometrien mit hoher Genauigkeit zueinander enthält und die Auswerteeinheit (24) eingerichtet ist, beim Bestimmen (12) der lateralen Position des Fahrzeugs durch das Vergleichen der ermittelten Geometrieinformationen und Eigenschaftsinformationen der Fahrbahnmarkierungen mit den Fahrbahnmarkierungsgeometrien aus der Fahrstreifengeometriekarte eine Menge von möglichen lateralen Positionen des Fahrzeugs zu bestimmen und eine bestmögliche laterale Position des Fahrzeugs durch Anwendung einer Sequenz (70) entsprechender Bewertungsfunktionen zu ermitteln, wobei eine erste Bewertungsfunktion (71) eine der jeweiligen möglichen lateralen Position zugrundeliegende Zuordnung der von der Kameraeinheit (25) erfassten Linientypen der Fahrbahnmarkierungen zu den in der Fahrstreifengeometriekarte abgelegten Linientypen der Fahrbahnmarkierungen bewertet, eine zweite Bewertungsfunktion (72) eine Abweichung der jeweiligen möglichen lateralen Position von einer Historie der Positionen des Fahrzeugs bewertet, und eine dritte Bewertungsfunktion (73) eine Lage der jeweiligen möglichen lateralen Position auf einer befahrbaren oder nicht zum Befahren vorgesehene Fahrspur bewertet.

5. Vorrichtung (20, 30) gemäß Anspruch 4, **wobei** die ermittelten Eigenschaftsinformationen der Fahrbahnmarkierungen angeben, dass es sich bei der Fahrbahnmarkierung um eine gestrichelte Linie, eine durchgezogene Line, eine Leitplanke oder einen Fahrbahnrand handelt.

6. Vorrichtung (20, 30) gemäß Anspruch 4 oder 5, **wobei** die Auswerteeinheit (24) eingerichtet ist für den Fall, dass durch das Vergleichen der ermittelten Geometrieinformationen und Eigenschaftsinformationen der Fahrbahnmarkierungen mit Fahrbahnmarkierungsgeometrien keine laterale Position des Fahrzeugs bestimmt werden kann, eine näherungsweise laterale Position zu generieren.

7. Computerlesbares Speichermedium mit Instruktionen, die bei Ausführung durch einen Computer den Computer zur Ausführung der Schritte eines Verfahrens gemäß einem der Ansprüche 1 bis 3 zur Bestimmung einer lateralen Position eines Fahrzeuges relativ zu den Fahrstreifen einer Fahrbahn veranlassen.

8. Autonom oder manuell gesteuertes Fahrzeug, **dadurch gekennzeichnet, dass** es eine Vorrichtung gemäß einem der Ansprüche 4 bis 6 aufweist.

## Claims

1. Method for determining a lateral position of a vehicle relative to the lanes of a roadway, comprising the steps of:
- ascertaining (10) geometry information and property information of roadway markings, by means of an image processing unit (22) which processes image information from a camera unit (25), the geometry information describing a course of the roadway markings in the direction of driving for a limited region in front of the vehicle and the property information describing a type of the relevant roadway markings;
- determining (11) an approximate position of the vehicle by means of a position determining unit (23); and
- determining (12) the lateral position of the vehicle by means of an evaluation unit (24) by comparing the ascertained geometry information and property information of the roadway markings with roadway marking geometries at the approximate position determined for the vehicle from a lane geometry map;
**characterized in that** the lane geometry map contains lane center geometries and lane edge geometries having high accuracy relative to each other, and, when determining (12) the lateral position of the vehicle by comparing the ascertained geometry information and property information of the roadway markings with the roadway marking geometries from the lane geometry map, a set of possible lateral positions of the vehicle is determined, and a best possible lateral position of the vehicle is ascertained by applying a sequence (70) of corresponding analysis functions, a first analysis function (71) analyzing an assignment, which underlies the relevant possible lateral position, of the line types of the roadway markings detected by the camera unit (25) to the line types of the roadway markings stored in the lane geometry map, a second analysis function (72) analyzing a deviation of the relevant possible lateral position from a history of the positions, and a third analysis function (73) analyzing a location of the relevant possible lateral position on a provided drivable or non-drivable lane.

2. Method according to claim 1, **wherein** the ascertained property information of the roadway markings indicates that the roadway marking is a dashed line, a solid line, a crash barrier, or a roadway edge.

3. Method according to claim 1 or 2, **wherein,** in the event that a lateral position of the vehicle cannot be determined by comparing the ascertained geometry information and property information of the roadway markings with roadway marking geometries, an approximated lateral position is generated.

4. Device (20) for determining a lateral position of a vehicle relative to the lanes of a roadway, wherein the device (20) comprises the following:
- an image processing unit (22), which processes image information from a camera unit (25), for ascertaining (10) geometry information and property information of roadway markings, wherein the geometry information describes a course of the roadway markings in the direction of driving for a limited region in front of the vehicle and the property information describes a type of the relevant roadway markings;
- a position determining unit (23) for determining (11) an approximate position of the vehicle; and
- an evaluation unit (24) for determining (12) the lateral position of the vehicle by comparing the ascertained geometry information and property information of the roadway markings with roadway marking geometries at the approximate position determined for the vehicle from a lane geometry map;
**characterized in that** the lane geometry map contains lane center geometries and lane edge geometries having high accuracy relative to each other, and the evaluation unit (24) is configured, when determining (12) the lateral position of the vehicle by comparing the ascertained geometry information and property information of the roadway markings with the roadway marking geometries from the lane geometry map, to determine a set of possible lateral positions of the vehicle, and to ascertain a best possible lateral position of the vehicle by applying a sequence (70) of corresponding analysis functions, a first analysis function (71) analyzing an assignment, which underlies the relevant possible lateral position, of the line types of the roadway markings detected by the camera unit (25) to the line types of the roadway markings stored in the lane geometry map, a second analysis function (72) analyzing a deviation of the relevant possible lateral position from a history of the positions of the vehicle, and a third analysis function (73) analyzing the location of the relevant possible lateral position on a provided drivable or non-drivable lane.

5. Device (20, 30) according to claim 4, **wherein** the ascertained property information of the roadway markings indicates that the roadway marking is a dashed line, a solid line, a crash barrier, or a roadway edge.

6. Device (20, 30) according to claim 4 or 5, **wherein,** in the event that a lateral position of the vehicle cannot be determined by comparing the ascertained geometry information and property information of the roadway markings with roadway marking geometries, the evaluation unit (24) is configured to generate an approximated lateral position.

7. Computer-readable storage medium comprising instructions that, when executed by a computer, cause the computer to execute the steps of a method according to any of claims 1 to 3 in order to determine a lateral position of a vehicle relative to the lanes of a roadway.

8. Autonomous or manually controlled vehicle, **characterized in that** it comprises a device according to any of claims 4 to 6.

## Revendications

1. Procédé pour déterminer une position latérale d'un véhicule par rapport aux voies de circulation d'une chaussée, comportant les étapes de :
- établissement (10) par le biais d'une unité de traitement d'images (22), qui traite des informations d'images d'une unité de caméra (25), d'informations géométriques et d'informations de propriétés de marquages de chaussée, dans lequel les informations géométriques décrivent pour une zone limitée devant le véhicule un tracé des marquages de chaussée dans le sens de la marche et les informations de propriétés décrivent un type des marquages de chaussée respectifs ;
- détermination (11) par le biais d'une unité de détermination de position (23) d'une position approximative du véhicule ; et
- détermination (12) par le biais d'une unité d'évaluation (24) de la position latérale du véhicule en comparant les informations géométriques et informations de propriétés établies des marquages de chaussée avec des géométries de marquage de chaussée au niveau de la position approximative déterminée pour le véhicule à partir d'une carte géométrique de voies de circulation ;
**caractérisé en ce que** la carte géométrique de voies de circulation contient des géométries centrales de voies de circulation et des géométries de bord de voies de circulation avec une grande précision les unes par rapport aux autres et, lors de la détermination (12) de la position latérale du véhicule, un ensemble de positions latérales possibles du véhicule est déterminé par la comparaison des informations géométriques et informations de propriétés établies des marquages de chaussée avec les géométries de marquage de chaussée provenant de la carte géométrique de voies de circulation et une position latérale optimale du véhicule est établie par l'application d'une séquence (70) de fonctions d'évaluation correspondantes, dans lequel une première fonction d'évaluation (71) évalue une association, à la base de la position latérale possible respective, des types de lignes des marquages de chaussée détectés par l'unité de caméra (25) aux types de lignes des marquages de chaussée enregistrés dans la carte géométrique de voies de circulation, une deuxième fonction d'évaluation (72) évalue un écart de la position latérale possible respective par rapport à un historique des positions du véhicule, et une troisième fonction d'évaluation (73) évalue une situation de la position latérale possible respective sur une file de circulation praticable ou non prévue pour la circulation.

2. Procédé selon la revendication 1, **dans lequel** les informations de propriétés établies des marquages de chaussée indiquent que le marquage de chaussée est une ligne discontinue, une ligne continue, une glissière de sécurité ou un bord de chaussée.

3. Procédé selon la revendication 1 ou 2, **dans lequel** une position latérale approximative du véhicule est générée dans le cas où aucune position latérale du véhicule ne peut être déterminée en comparant les informations géométriques et informations de propriétés établies des marquages de chaussée avec des géométries de marquage de chaussée.

4. Dispositif (20) de détermination d'une position latérale d'un véhicule par rapport aux voies de circulation d'une chaussée, dans lequel le dispositif (20) comprends les éléments suivants:
- une unité de traitement d'images (22), qui traite des informations d'image d'une unité de caméra (25), pour établir (10) des informations géométriques et des informations de propriétés de marquages de chaussée, dans lequel les informations géométriques décrivent pour une zone limitée devant le véhicule un tracé des marquages de chaussée dans le sens de la marche et les informations de propriétés décrivent un type des marquages de chaussée respectifs ;
- une unité de détermination de position (23) pour déterminer (11) une position approximative du véhicule ; et
- une unité d'évaluation (24) pour déterminer (12) la position latérale du véhicule en comparant les informations géométriques et informations de propriétés établies des marquages de chaussée avec des géométries de marquage de chaussée au niveau de la position approximative déterminée pour le véhicule à partir d'une carte géométrique de voies de circulation ;
**caractérisé en ce que** la carte géométrique de voies de circulation contient des géométries centrales de voies de circulation et des géométries de bord de voies de circulation avec une grande précision les unes par rapport aux autres et l'unité d'évaluation (24) est conçue, lors de la détermination (12) de la position latérale du véhicule, pour déterminer un ensemble de positions latérales possibles du véhicule en comparant les informations géométriques et informations de propriétés établies des marquages de chaussée avec les géométries de marquage de chaussée provenant de la carte géométrique de voies de circulation et pour déterminer une position latérale possible optimale du véhicule en appliquant une séquence (70) de fonctions d'évaluation correspondantes, dans lequel une première fonction d'évaluation (71) évalue une association, à la base de la position latérale possible respective, des types de lignes des marquages de chaussée détectés par l'unité de caméra (25) avec les types de lignes des marquages de chaussée enregistrés dans la carte géométrique de voies de circulation, une deuxième fonction d'évaluation (72) évalue un écart de la position latérale possible respective par rapport à un historique des positions du véhicule, et une troisième fonction d'évaluation (73) évalue une situation de la position latérale possible respective sur une file de circulation praticable ou non prévue pour la circulation.

5. Dispositif (20, 30) selon la revendication 4, **dans lequel** les informations de propriétés établies des marquages de chaussée indiquent que le marquage de chaussée est une ligne discontinue, une ligne continue, une glissière de sécurité ou un bord de chaussée.

6. Dispositif (20, 30) selon la revendication 4 ou 5, **dans lequel** l'unité d'évaluation (24) est conçue pour générer une position latérale approximative dans le cas où aucune position latérale du véhicule ne peut être déterminée par la comparaison des informations géométriques et informations de propriétés établies des marquages de chaussée avec des géométries de marquage de chaussée.

7. Support de stockage lisible par ordinateur comportant des instructions, lesquelles, lors de leur exécution par un ordinateur, amènent l'ordinateur à exécuter les étapes d'un procédé selon l'une des revendications 1 à 3 pour la détermination d'une position latérale d'un véhicule par rapport aux voies de circulation d'une chaussée.

8. Véhicule à conduite autonome ou manuelle, **caractérisé en ce qu'**il comprend un dispositif selon l'une des revendications 4 à 6.
